Europäisches Patentamt

European Patent Office

Office européen des brevets

(11) Veröffentlichungsnummer : **0 156 374**
**B1**

(12) EUROPÄISCHE PATENTSCHRIFT

(45) Veröffentlichungstag der Patentschrift :
13.12.89

(21) Anmeldenummer : 85103653.3

(22) Anmeldetag : 27.03.85

(51) Int. Cl.⁴ : **C 07 F   9/10**, B 01 D 11/00

(54) Verfahren zur Gewinnung von Lecithin, vorzugsweise zur kontinulierlichen Gewinnung von Rein-Leicithin (entölt).

(30) Priorität : 30.03.84 DE 3411755

(43) Veröffentlichungstag der Anmeldung :
02.10.85 Patentblatt 85/40

(45) Bekanntmachung des Hinweises auf die Patenterteilung : 13.12.89 Patentblatt 89/50

(84) Benannte Vertragsstaaten :
BE FR GB IT LU NL

(56) Entgegenhaltungen :
EP--A-- 0 137 214
DE--A-- 2 737 793
DE--A-- 3 011 185
CHEMIE-INGENIEUR-TECHNIK, Band 53, Nr. 7, 1981,
Seiten 529-542, G. BRUNNER et al.: "Zum Stand der
Extraktion mit komprimierten Gasen"

(73) Patentinhaber : Lucas Meyer GmbH & Co
Ausschläger Elbdeich 62
D-2000 Hamburg 28 (DE)

(72) Erfinder : Peter, Siegfried, Prof. Dr.
Egerlandstrasse 3
D-8520 Erlangen (DE)
Erfinder : Weidner, Eckhard, Dipl.-Ing.
Egerlandstrasse 3
D-8520 Erlangen (DE)
Erfinder : Tiegs, Carsten, Dipl.-Ing.
Moosäcker 29
D-8501 Eckenhaid (DE)

(74) Vertreter : DIEHL GLAESER HILTL & PARTNER
Patentanwälte Königstrasse 28
D-2000 Hamburg 50 (DE)

## Beschreibung

Die Erfindung bezieht sich auf die Gewinnung von Rein-Lezithin aus Rohlezithin durch Gegenstromextraktion mittels eines Lösungsmittels, das sich in der Nähe seiner kritischen Temperatur befindet, bei Drücken, die höher als der Dampfdruck des Lösungsmittels sind.

Die Lezithine gehören zu der Verbindungsklasse der Phosphatide, die fast in jedem pflanzlichen oder tierischen Material vorkommen. In reichlichen Mengen lassen sie sich vor allem aus Gehirnmasse, Eigelb und Sojabohnen gewinnen. Das Element Phosphor enthalten die Phosphatide als Phosphatester.

Sojaöl, Rapsöl, gelegentlich auch Sonnenblumenöl werden nach der Extraktion entlezithiniert. Sie enthalten das Lecithin in kolloidaler Form. Unter Rühren wird Wasser in genau dosierter Menge dem Öl zugegeben und das im Rohöl enthaltene Lezithin bei erhöhter Temperatur hydratisiert. Das emulsionsartige Gemisch wird in einem Separator getrennt. Das entlezithinierte Rohöl verläßt den Separator als leichtere Phase. Die wäßrige schlammige Phase enthält das Lezithin. Durch Trocknung in einem Trockenapparat unter Vakuum wird aus der wäßrigen schlammigen Phase das zähflüssige Rohlezithin erhalten.

Der Menge, wie auch der Beschaffenheit nach kommt industriell erzeugtem Sojalezithin besondere Bedeutung zu. Das aus extrahiertem Rohöl im Zuge der Sojabohnenverarbeitung gewonnene Rohlezithin besteht zu etwa einem Drittel aus Öl, zu etwa zwei Dritteln aus in Aceton unlöslichen Bestandteilen, vorwiegend Phosphatiden.

Bei einigen Anwendungen der Lezithine ist es erstrebenswert, das Öl weitgehend zu entfernen. Lezithine werden in großem Umfang bei der Verarbeitung von Lebensmitteln und bei pharmazeutischen und kosmetischen Präparationen verwendet. Deswegen werden an die Qualität der Lezithine, insbesondere auch in Hinsicht auf ihre physiologische Unbedenklichkeit, hohe Anforderungen gestellt.

Die Reduzierung des Ölgehaltes des Roh-Lezithins geschieht durch Extraktion mit bestimmten Lösemitteln bzw. Lösemittelgemischen. Diese Maßnahmen sind sehr aufwendig. Insbesondere ist die in der Endstufe erforderliche Entfernung der Restanteile von Wasser oder Lösungsmitteln sehr aufwendig. Darüber hinaus wird das Lezithin im Verlaufe dieses Verfahrensschrittes über einen längeren Zeitraum belastenden Bedingungen, wie z. B. erhöhter Temperatur ausgesetzt.

Es ist bekannt, Reinlezithin mit Hilfe von überkritischen Gasen herzustellen (DE 30 11 185 A 1), indem Rohlezithin mit einem Gas als Extraktionsmittel unter bezüglich Druck und Temperatur überkritischen Bedingungen in einer Extraktionsstufe in Kontakt gebracht wird. Das extrakthaltige Gas wird von der Extraktionsstufe in eine Abscheidungsstufe überführt, in der das extrakthaltige Gas durch Druck- und/oder Temperaturänderung in Gas und Extrakt aufgetrennt wird. Das Gas wird aus der Abscheidungsstufe in die Extraktionsstufe zurückgeführt. Die Extraktion zur Entfernung des im Rohlezithin enthaltenen Öles dauert bis zu 12 Stunden. Eine so lange Extraktionszeit hat jedoch zur Folge, daß die Raumzeitausbeute der kostspieligen Druckapparate gering ist. Das Verfahren wird dadurch unwirtschaftlich. Die lange Extraktionszeit ist aber deshalb unvermeidbar, weil nach Entfernen des Hauptanteils des Öles das Lezithin pastös ist und die Stoffübergangsgeschwindigkeit sehr gering wird.

Es ist auch bekannt (CHEMIE-INGENIEUR-TECHNIK, Band 53, No 7, Seiten 529-542), bei der Extraktion mit überkritischen Gasen ein unterkritisches Schleppmittel einzusetzen. Dabei besteht die Gefahr, dass sich weitere Phasen bilden, so daß dann das System zur Stofftrennung ungeeignet ist.

Die vorliegende Erfindung ist auf ein Verfahren zur Gewinnung von Reinlezithin gerichtet, welches die vorgenannten Nachteile nicht aufweist und insbesondere eine bessere Raumzeitausbeute der eingesetzten Apparate ermöglicht. Im Kern beruht die vorliegende Erfindung auf einem Verfahren zur Gewinnung von Lezithin aus dem bei der Herstellung pflanzlicher Öle anfallenden Rohlezithin mit Hilfe eines Extraktionsmittels, dadurch gekennzeichnet, daß die Extraktion in einer Gegenstromkolonne erfolgt, daß als Extraktionsmittel ein überkritisches Gemisch verwendet wird, das aus einem überkritischen Gas und einem bezüglich der Temperatur unterkritischen Schleppmittel besteht, und daß Druck und Temperatur so eingestellt werden, daß das Lezithin im Gleichgewicht mit dem Gemisch eine niedrigviskose flüssige Phase bildet, wobei das überkritische Gas aus der Gruppe : $N_2$, $CO_2$, $N_2O$, $CF_4$, $CF_3CF_2Cl$ und $CF_3Cl$ und das Schleppmittel aus der Gruppe : Propan, Butan, $CH_3CHF_2$, $CH_3CF_2Cl$, $CHF_2Cl$, $CHFCl_2$, $CHF_3$ ausgewählt werden.

Eine besondere Dargestaltung besteht dann, daß als überkritisches Gas ein Gemisch aus Stickstoff und $N_2O$ im Verhältnis von 1 :2 bis 2 :1 und als Schleppmittel Propan bei Drücken von 50 bis 300 bar, vorzugsweise 80 bis 200 bar, und Temperaturen im Bereich von 10 bis 80 °C zur Trennung des Lezithins von den Begleitstoffen des Rohlezithins verwendet werden.

Eine weitere Ausgestaltung des Verfahrens ist dadurch charakterisiert, daß als überkritisches Gas ein Gemisch aus Stickstoff und $N_2O$ im Verhältnis von 1 :2 bis 2 :1 und als Schleppmittel Butan bei Drücken von 70 bis 300 bar, vorzugsweise 80 bis 200 bar und Temperaturen im Bereich von 10 bis 80 °C vorzugsweise 20 bis 60 °C zur Trennung des Lezithins von den Begleitstoffen des Rohlezithins verwendet werden.

Die Fig. 1 zeigt ein Diagramm des quasiternären Systems aus Lezithin, Propan und Kohlendioxid.

Die Fig. 2 zeigt eine Darstellung einer zur Durchführung des Verfahrens der vorliegenden Erfindung geeigneten Vorrichtung.

Die verwendeten Schleppmittel sollen bei den infrage kommenden Prozesstemperaturen im Bereich von 0 bis 90 °C einen hohen Dampfdruck haben, damit sie leicht aus dem erzeugten Reinlezithin entfernt werden können. Das ist im Bereich der reduzierten Temperatur von 0,7 bis 1 der Fall. Geeignete Lösungsmittel sind, Propan, $CHF_2Cl$, $CHFCl_2$, Butan, $CH_3CHF_2$, $CH_3CF_2Cl$, welche physiologisch unbedenklich sind.

Wenn diese Lösungsmittel sich unterhalb ihres Dampfdrucks befinden, vermögen sie Öl zu lösen, wogegen die Löslichkeit von Lezithin unter diesen Bedingungen gering ist. Durch Erhöhung des Druckes wird überraschenderweise die Löslichkeit des Lezithins in diesen Lösungsmitteln erhöht. Bei Überschreiten eines Bestimmten Druckes wird schließlich vollständige Mischbarkeit des Lezithins mit den genannten Lösungsmitteln erreicht. Es besteht somit die Möglichkeit das Lezithin in Form einer flüssigen Lösung in einem Lösungsmittel mit hohem Dampfdruck zu handhaben.

Grundsätzlich könnten die Ölanteile aus dem Rohlezithin auch mit einem der guten Löser, wie Ethan, Propan, $CHF_2Cl$, $CHFCl_2$ usw. im Bereich der reduzierten Temperatur von 0,7 bis 1, vorzugsweise von 0,8 bis 0,95, bei Drücken zwischen ihrem jeweiligen Dampfdruck und dem Lösungsdruck für Lezithin allein extrahiert werden. Unter diesen Bedingungen sind die quasiternären Systeme Öl/Lezithin/Extraktionsmittel nämlich zweiphasig. Von den beiden Phasen ist die leichte reich an Extraktionsmittel und die schwere arm an Extraktionsmittel. Das Verhältnis von Öl zu Lezithin in der leichten Phase ist größer als in der schweren Phase, so daß Öl und Lezithin voneinander getrennt werden können. Mit zunehmender Verarmung der schweren, lezithinreichen Phase an Öl wird diese jedoch zähflüssiger. Damit nimmt auch die Stoffübergangsgeschwindigkeit ab. Am Ende bleibt ein pastöses Lezithin mit einem mäßigen Ölgehalt zurück, welches zur Klumpenbildung neigt. Die restlichen Ölanteile können dann nur noch mit großem Aufwand an Zeit extrahiert werden.

Nach dem Verfahren gemäß der Erfindung wird der Prozeßdruck soweit erhöht, daß eine niedrigviskose Lösung des Reinlezithins am Ende des Trennprozesses vorliegt. Diese Lösung kann ohne Schwierigkeit aus der unter Druck stehenden Trennapparatur abgezogen werden. Bei dem Druck, bei welchem eine niedrigviskose Lösung des Reinlezithins im Extraktionsmittel erreicht wird, wird aber das quasiternäre System Öl/Lezithin/Extraktionsmittel einphasig. Überraschenderweise kann durch Zugabe eines ebenfalls leichtflüchtigen, d. h. im Bereich der reduzierten Temperatur von 0,7 bis 1 befindlichen Stoffes ein zweiphasiges quasiquarternäres System mit folgenden Eigenschaften erzeugt werden : a) die Selektivität in Hinsicht auf die Trennung von Öl und Lezithin ist für eine Gegenstromextraktion ausreichend groß ; b) das aus einem Gemisch der beiden leichtflüchtigen Komponenten bestehende Extraktionsmittel vermag bei den infrage stehenden Temperaturen und Drücken Reinlezithin zu einer niedrigviskosen Lösung mit hoher Konzentration zu lösen. Unter den erhöhten Drücken nach dem Verfahren gemäß der Erfindung sind die Löslichkeiten für Öl und Lezithin in den beiden koexistierenden fluiden Phasen erhöht. So enthält die Extraktphase erheblich mehr Öl gelöst als die Dampfphase beim jeweiligen Dampfdruck. Fügt man der Lösung von Rohlezithin in diesen guten Lösungsmitteln in geeigneter Konzentration eine Komponente zu, die Lezithin wenig löst, so entstehen überraschenderweise zwei Phasen. Die schwere Phase enthält Lezithin in höherer Konzentration als die leichtere Phase. Dagegen löst sich das im Rohlezithin enthaltene Öl bevorzugt in der leichten Phase. Geeignete schlechte Lösemittel für Lezithin nach dem Verfahren dieser Erfindung sind Kohlendioxid, $CF_3Cl$, $N_2O$, $CF_4$. Sie besitzen ebenfalls einen hohen Dampfdruck, sind somit leicht aus den Produkten zu entfernen und sind physiologisch unbedenklich.

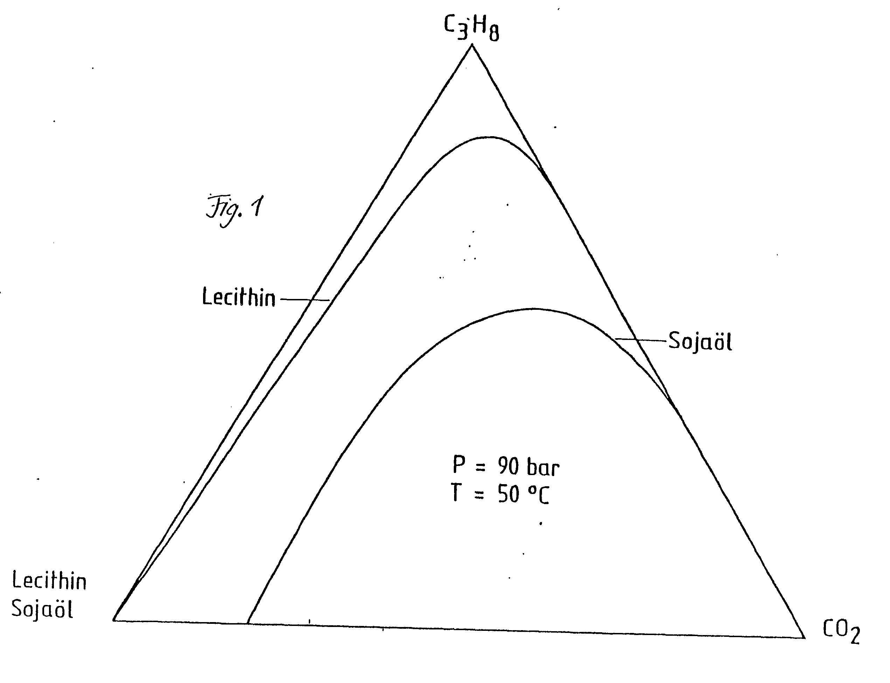

Werden beispielsweise Propan als gutes Lösemittel und Kohlendioxid als schlechter Löser für Lezithin ausgewählt, so beobachtet man bei 50 °C und einem Druck von 90 bar folgendes : Das quasiternäre System Lezithin, Propan, Kohlendioxid hat ein wesentlich ausgedehnteres Zweiphasengebiet als das quasiternäre System Öl, Propan, Kohlendioxid, wie in Fig. 1 schematisch dargestellt. Wird das Verhältnis von gutem Lezithinlösungsmittel zu schlechtem Lezithinlösungsmittel so gewählt, daß die Mischungsgerade von der Lezithin/Öl-Ecke zum Zustandspunkt für das Extraktionsmittel oberhalb des Zweiphasengebietes des Systems Sojaöl, Propan, Kohlendioxid aber unterhalb der Phasengrenzlinie des Systems Lezithin-Propan-Kohlendioxid verläuft, so erhält man im quasiquaternären System ein Phasengleichgewicht mit günstigen Eingenschaften. Der $CO_2$-Gehalt des Propans kann dabei zwischen 10 und 30 Gew.% betragen. Bei hoher Beladung der Propan/$CO_2$-reichen Phase wird ein hoher Trennfaktor für Öl-Lezithin beobachtet. Im System Rohlezithin/$CHF_2$/$Cl$/$CO_2$ ist bei 80 °C bei einem $CO_2$-Gehalt des Extraktionsmittels von 10 Gew.% ein Druck von etwa 260 bar notwendig, um analoges Phasenverhalten zu bewirken. Durch das Zumischen eines schlechten Lösers zu einem Schleppmittel wird der Druck, der zur Erzeugung einer niedrig viskosen Lezithinlösung erforderlich ist, wesentlich erhöht. Je höher die Konzentration des schlechten Lösers desto höher der notwendige Druck.

Sind die schwere lezithinreiche Phase und die hochbeladene Extraktphase niedrigviskos, so ist die Stoffaustauschgeschwindigkeit genügend, um den Trennprozeß in einer Gegenstromkolonne durchzuführen. Extrakt- und Raffinatphase können mit Hilfe konventioneller Kolonneneinbauten gut vermischt werden. Das gewonnene Reinlezithin kann in niedrigviskoser Lösung ohne Schwierigkeit aus der Druckapparatur kontinuierlich entnommen werden. Auf diese Weise kann ein vielstufiges Gegenstromtrennverfahren ohne Öffnen der Druckapparatur entworfen werden.

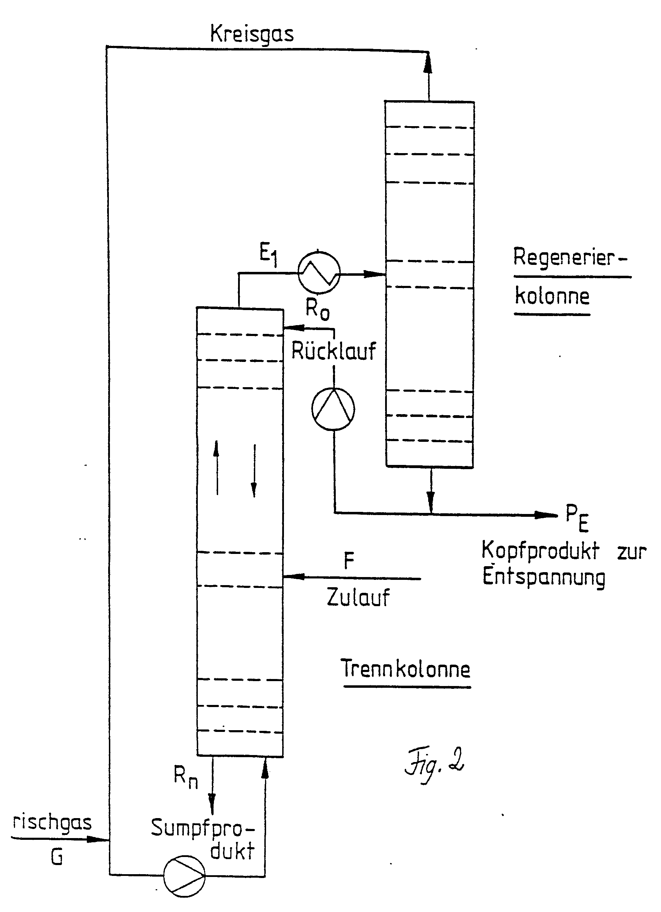

Das Verfahren gemäß der Erfindung wird anhand der schematischen Darstellung in Fig. 2 weiterhin erläutert. Die Apparatur besteht aus zwei Kolonnen, von denen die eine, die Trennkolonne zur Trennung der schwerflüchtigen Substanzen und die andere, die Regenerierkolonne zur Abtrennung der extrahierten Komponenten aus dem Kreisgas dient.

Das Rohlezithin wird im mittleren Teil der Trennkolonne, bei F bzw. Zulauf, zugeführt. Das zirkulierende Gemisch aus der überkritischen Komponente und dem Schleppmittel belädt sich in der Trennkolonne mit Öl und Lezithin. Gleichzeitig lösen sich die überkritische Komponente und das Schleppmittel im Lezithin-Ölgemisch auf. Das im überkritischen Gemisch aus Schleppmittel und überkritischer Komponente leichter lösliche Öl wird auf dem Weg nach oben angereichert und verläßt mit der gasförmigen Phase den Verstärkerteil der Trennkolonne am Kopf (bei E₁). Nach Passieren einese Wärmetauschers und/oder eines Entspannungsventils tritt das mit Öl beladene Extraktionsmittel in die Regenerierkolonne ein.

Temperatur und Druck in der Regenerierkolonne werden so gewählt, daß das Öl aus dem im Kreis geführten Extraktionsmittel ausfällt. Das kondensierende Öl, in dem überkritische Komponente und Schleppmittel dem Gleichgewicht entsprechend gelöst sind, wird aus dem Sumpf der Regenerierkolonne abgezogen und in Kopfprodukt $P_E$ und Rücklauf $R_O$ geteilt. Der Rücklauf wird auf den Kopf der Trennkolonne zurückgepumpt. Das Kopfprodukt PE wird in einen Behälter hinein entspannt. Die sich dabei entlösenden Mengen an gasförmigen Lösungsmitteln werden mit Hilfe eines Kompressors in den Kreislauf zurückgegeben. Das im Kreislauf geführte Extraktionsmittelgemisch, das weitgehend frei von Öl ist, verläßt die Regenerierkolonne am Kopf und wird mit Hilfe eines Umlaufkompressors in den Sumpf der Trennkolonne zurückgeführt. Auf der Unterdruckseite des Umlaufkompressors wird dem Kreisgas Frischgas G zugegeben.

Das als Rücklauf in die Trennkolonne gepumpte Öl fließt über die Kolonneneinbauten, die für eine gute Verteilung der flüssigen und der fluiden, überkritischen Phasen sorgen, nach unten. Dabei reichert sich der Rücklauf mehr und mehr an Lezithin an, bis er am Ende des Abtriebsteiles schließlich aus einer Lösung von Rein-Lezithin in Extraktionsmittel besteht. Diese Lösung wird als Sumpfprodukt $R_n$ aus der Trennkolonne chargenweise oder kontinuierlich abgezogen und in einen Behälter hinein entspannt. Die dabei frei werdenden Komponenten des Extraktionsmittels werden ebenfalls in den Extraktionsmittelkreislauf zurückgeführt.

Als Trennkolonnen sind neben Bodenkolonnen auch Füllkörperkolonnen und Kolonnen mit mechanisch bewegten Einbauten, wie z. B. Rotationskolonnen geeignet.

Das Verfahren nach der Erfindung wird anhand der folgenden Beispiele noch näher erläutert.

Beispiel 1

Ein Rohlezithin, das 35 Gew.% Öl und 65 Gew.% Lezithin enthält, wird in einer Apparatur, die der schematischen Darstellung in Fig. 2 entsprechend aufgebaut ist, aufbereitet. Das Rohlezithin wird etwa in der Mitte der Trennkolonne zugepumpt. Der Verstärkerteil der Kolonne enthält 34 Siebböden, der Abtriebsteil 68 Siebböden. Der Bodenabstand beträgt 50 mm. Als Extraktionsmittel dient Propan mit einem Gehalt von 25 Gew.% $CO_2$. Die Trennkolonne arbeitet bei 50 °C und einem Druck von 90 bar. Das Extraktionsmittel durchströmt die Kolonne von unten nach oben. Seine Beladung mit Öl und Lezithin beträgt unter diesen Bedingungen etwa 11 Gew.%. Der die Kolonne verlassende Extraktionsstrom wird auf 80 °C erwärmt und in die Regenerierkolonne, die bei einem Druck von 60 bar arbeitet, hinein entspannt. Dabei scheiden sich die im Extraktionsmittel gelösten Stoffe praktisch vollständig als Kopfprodukt ab. Das Kopfprodukt enthält nach Entfernen des gelösten Extraktionsmittels 97,5 Gew.% Öl und 2,5 Gew.% Lezithin. Ein Teilstrom des Kopfproduktes wird auf die Temperatur der Trennkolonne gebracht und in den Kopf der Trennkolonne als Rücklauf gepumpt.

Das von den gelösten Stoffen befreite Extraktionsmittel verläßt die Regenerierkolonne am Kopf und wird mit Hilfe eines Kompressors auf den Druck der Trennkolonne gebracht und nach Passieren eines Wärmetauschers in den Sumpf der Trennkolonne zurückgeführt. Das flüssige Sumpfprodukt wird abgezogen und entspannt. Nach Entfernen des gelösten Extraktionsmittels enthält das Sumpfprodukt 96 Gew.% Lezithin und 4 Gew.% Begleitstoffe, hauptsächlich Öl. Die bei der Entspannung von Sumpf- und Kopfprodukt freiwerdenden Extraktionsmittel werden in den Kreislauf zurückgegeben.

Beispiel 2

Rohlezithin aus Sojaöl, das 35 Gew.% Öl und 65 Gew.% Lezithin enthält, wird in einer Apparatur, die der schematischen Darstellung in Fig. 2 entsprechend aufgebaut ist, aufbereitet. Das Rohlezithin wird etwa in der Mitte der Trennkolonne zugepumpt. Der Verstärkerteil der Kolonne enthält 34 Siebböden, der Abtriebsteil 68 Siebböden. Der Bodenabstand beträgt 50 mm. Als Extraktionsmittel dient $CHF_2Cl$, das 15 Gew.% $CO_2$ enthält. Die Trennkolonne arbeitet bei 80 °C und einem Druck von 300 bar. Das Extraktionsmittel durchströmt die Kolonne von unten nach oben. Seine Beladung mit den Stoffen des Rohlezithins beträgt unter diesen Bedingungen etwa 9 Gew.%. Der die Kolonne verlassende Extraktionsstrom wird in die Regenerierkolonne, die bei einem Druck von 130 bar arbeitet, hinein entspannt. Dabei scheiden sich die im Extraktionsmittel gelösten Stoffe praktisch vollständig als Kopfprodukt ab. Das Kopfprodukt enthält nach Entfernen des gelösten Extraktionsmittels 98 Gew.% Öl und 2 Gew.% Lezithin. Ein Teilstrom des Kopfproduktes wird in den Kopf der Trennkolonne als Rücklauf gepumpt.

Das von den gelösten Stoffen befreite Extraktionsmittel verläßt die Regenerierkolonne am Kopf und wird auf den Druck der Trennkolonne komprimiert und nach Passieren eines Wärmetauschers in den Sumpf der Trennkolonne zurückgeführt. Das flüssige Sumpfprodukt wird abgezogen und entspannt. Nach Entfernen des gelösten Extraktionsmittels enthält das Sumpfprodukt 96 Gew.% Lezithin und 4 Gew.% Begleitstoffe, hauptsächlich Öl. Die bei der Entspannung von Sumpf- und Kopfprodukt freiwerdenden Extraktionsmittel werden in den Kreislauf zurückgegeben.

## Patentansprüche

1. Verfahren zur Gewinnung von Lezithin aus dem bei der Herstellung pflanzlicher Öle anfallenden Rohlezithin mit Hilfe eines Extraktionsmittels, dadurch gekennzeichnet, daß die Extraktion in einer Gegenstromkolonne erfolgt, daß als Extraktionsmittel ein überkritisches Gemisch verwendet wird, das aus einem überkritischen Gas und einem bezüglich der Temperatur unterkritischen Schleppmittel besteht, und daß Druck und Temperatur so eingestellt werden, daß das Lezithin im Gleichgewicht mit dem Gemisch eine niedrigviskose flüssige Phase bildet, wobei das überkritische Gas aus der Gruppe : $N_2$, $CO_2$, $N_2O$, $CF_4$, $CF_3CF_2Cl$ und $CF_3Cl$ und das Schleppmittel aus der Gruppe : Propan, Butan, $CH_3CHF_2$, $CH_3CF_2Cl$, $CHF_2Cl$, $CHFCl_2$, $CHF_3$ ausgewählt werden.

2. Verfahren nach Anspruch 1, dadurch gekennzeichnet, daß als überkritisches Gas Kohlendioxid und als Schleppmittel Propan bei Drücken von 40 bis 100 bar, vorzugsweise 50 bis 80 bar, und Temperaturen im Bereich von 31 bis 80 °C, vorzugsweise 40 bis 60 °C, verwendet werden.

3. Verfahren nach Anspruch 1, dadurch gekennzeichnet, daß als überkritisches Gas Kohlendioxid und als Schleppmittel Butan bei Drücken von 40 bis 100 bar, vorzugsweise 50 bis 80 bar, und Temperaturen im Bereich von 31 bis 80 °C, vorzugsweise 40 bis 60 °C, verwendet werden.

4. Verfahren nach Anspruch 1, dadurch gekennzeichnet, daß als überkritisches Gas ein Gemisch aus Stickstoff und $N_2O$ im Verhältnis von 1 :2 bis 2 :1 und als Schleppmittel Propan bei Drücken von 50 bis 300 bar, vorzugsweise 80 bis 200 bar, und Temperaturen im Bereich von 10 bis 80 °C, vorzugsweise 20 bis 60 °C zur Trennung des Lezithins von den Begleitstoffen des Rohlezithins verwendet werden.

5. Verfahren nach Anspruch 1, dadurch gekennzeichnet, daß als überkritisches Gas ein Gemisch aus Stickstoff und $N_2O$ im Verhältnis von 1 :2 bis 2 :1 und als Schleppmittel Butan bei Drücken von 70 bis 300 bar, vorzugsweise 80 bis 200 bar und Temperaturen im Bereich von 10 bis 80 °C, vorzugsweise 20 bis 60 °C zur Trennung des Lezithins von den Begleitstoffen des Rohlezithins verwendet werden.

6. Verfahren nach Anspruch 1, dadurch gekennzeichnet, daß als überkritisches Gas Kohlendioxid und als Schleppmittel $CHF_2Cl$ bei Drücken von 60 bis 200 bar, vorzugsweise 90 bis 150 bar, und Temperaturen von 31 bis 80 °C, vorzugsweise 40 bis 60 °C zur Trennung des Lezithins von den Begleitstoffen des Rohlezithins verwendet werden.

7. Verfahren nach Anspruch 1, dadurch gekennzeichnet, daß als überkritisches Gas Distickstoffoxid und als Schleppmittel $CHF_2Cl$ bei Drücken von 60 bis 200 bar, vorzugsweise von 90 bis 150 bar, und Temperaturen von 36,5 bis 80 °C, vorzugsweise von 40 bis 60 °C zur Trennung des Lezithins von den Begleitstoffen des Rohlezithins verwendet werden.

8. Verfahren nach Anspruch 1 oder 2, dadurch gekennzeichnet, daß die Abscheidung der extrahierten Begleitstoffe aus der beladenen komprimierten Lösemittelphase durch Entspannung auf 30 bis 40 bar bei gleichzeitiger Temperaturerhöhung auf 70 bis 100 °C erfolgt.

9. Verfahren nach einem der Ansprüche 1 bis 8, dadurch gekennzeichnet, daß die Kontaktzeit zur Trennung des Lezithins von den Begleitstoffen des Rohlezithins 2 bis 10 Minuten, vorzugsweise 3 bis 5 Minuten beträgt.

10. Verfahren nach Anspruch 1 bis 9, dadurch gekennzeichnet, daß den Lezithin lösenden Extraktionsmitteln ein Extraktionsmittel, das Lezithin sehr wenig löst, in einer Menge von 2 bis 40 Gew.%, vorzugsweise von 5 bis 30 Gew.%, zugesetzt wird.

11. Verfahren nach Anspruch 1 bis 10, dadurch gekennzeichnet, daß das beladene Extraktionsmittel in einer Regenerierstufe durch Druck- und/oder Temperaturänderung in Extrakt und Extraktionsmittel aufgetrennt wird.

12. Verfahren nach Anspruch 1 bis 11, dadurch gekennzeichnet, daß das Extraktionsmittel nach Aufheben der Druck- oder Temperaturänderung in eine Gegenstromkolonne zurückgeführt wird.

13. Verfahren nach Anspruch 1 bis 12, dadurch gekennzeichnet, daß das Reinlezithin in flüssiger Lösung aus dem Sumpf der Gegenstromkolonne kontinuierlich oder chargenweise entnommen wird.

## Claims

1. Process for recovering lecithine from the crude lecithine accruing from the preparation of vegetable oils, by means of an extracting agent, characterized in that the extraction is carried out in a countercurrent column, that as extracting agent a supercritical mixture is used which consists of a supercritical gas and an entrainer which is subcritical with respect to temperature, and that pressure and temperature are adjusted such that the lecithine in balance with the mixture forms a fluid phase of low viscosity, the supercritical gas being selected from the group : $N_2$, $CO_2$, $N_2O$, $CF_4$, $CF_3CF_2Cl$ and $CF_3Cl$ and the entrainer being selected from the group : propane, butane, $CH_3CHF_2$, $CH_3CF_2Cl$, $CHF_2Cl_2$, $CHF_3$.

2. Process according to claim 1, characterized in that as supercritical gas carbon dioxide and as entrainer propane are used at pressures of 40 to 100 bar, preferably 50 to 80 bar, and at temperatures within the range of 31 to 80 °C, preferably 40 to 60 °C.

3. Process according to claim 1, characterized in that as supercritical gas carbon dioxide and as entrainer butane are used at pressures of 40 to 100 bar, preferably 50 to 80 bar, and at temperatures within the range of 31 to 80 °C, preferably 40 to 60 °C.

4. Process according to claim 1, characterized in that as supercritical gas a mixture of nitrogen and $N_2O$ in a ratio of 1 :2 to 2 :1 and as entrainer propane are used at pressures of 50 to 300 bar, preferably 80 to 200 bar, and at temperatures within the range of 10 to 80 °C, preferably 20 to 60 °C, for separating the lecithine from the accompanying substances of the crude lecithine.

5. Process according to claim 1, characterized in that as supercritical gas a mixture of nitrogen and $N_2O$ in a ratio of 1 :2 to 2 :1 and as entrainer butane are used at pressures of 70 to 300 bar, preferably 80 to 200 bar, and at temperatures within the range of 10 to 80 °C, preferably 20 to 60 °C, for separating the lecithine from the accompanying substances of the crude lecithine.

6. Process according to claim 1, characterized in that as supercritical gas carbon dioxide and as entrainer $CHF_2Cl$ are used at pressures of 60 to 200 bar, preferably 90 to 150 bar, and at temperatures of 31 to 80 °C, preferably 40 to 60 °C, for separating lecithine from the accompanying substances of the crude lecithine.

7. Process according to claim 1, characterized in that as supercritical gas nitrous oxide and as entrainer $CHF_2Cl$ are used at pressures of 60 to 200 bar, preferably 90 to 150 bar, and at temperatures of 36.5 to 80 °C, preferably 40 to 60 °C, for separating the lecithine from the accompanying substances of the crude lecithine.

8. Process according to claim 1 or 2, characterized in that the separation of the extracted accompanying substance from the loaded compressed solvent phase is performed by expansion to 30 to 40 bar with a simultaneous rise in temperature to 70 to 100 °C.

9. Process according to any one of claims 1 to 8, characterized in that the contact period for separating the lecithine from the accompanying substances of the crude lecithine is 2 to 10 minutes, preferably 3 to 5 minutes.

10. Process according to claims 1 to 9, characterized in that to the extracting agents dissolving the lecithine an extracting agent is added in an amount of 2 to 40 % by weight, preferably of 5 to 30 % by weight dissolves the lecithine to a very small extent.

11. Process according to claims 1 to 10, characterized in that in a regeneration step the loaded extracting agent is separated to extract and extracting agent by a change in pressure and/or temperature.

12. Process according to claims 1 to 11, characterized in that after the termination of the change in pressure or temperature the extracting agent is recycled to a countercurrent column.

13. Process according to claims 1 to 12, characterized in that the pure lecithine is removed, continuously or in batches, in liquid phase from the bottom of the countercurrent column.

**Revendications**

1. Procédé d'extraction de lécithine à partir de la lécithine brute lors de la fabrication d'huiles végétales à l'aide d'un agent d'extraction, caractérisé en ce que l'on réalise l'extraction dans une colonne à contre-courant, que l'on utilise comme agent d'extraction un mélange surcritique, qui est constitué d'un gaz surcritique et d'un agent d'entraînement souscritique relativement à la température et que la pression et la température sont établies de façon que la lécithine forme à poids égal avec le mélange une phase visqueuse faiblement fluide, le gaz surcritique étant choisi dans le groupe : $N_2$, $CO_2$, $N_2O$, $CF_4$, $CF_3CF_2Cl$ et $CF_3Cl$ et l'agent d'entraînement dans le groupe : propane, butane, $CH_3CHF_2$, $CH_3CF_2Cl$, $CHF_2Cl$, $CHFCl_2$, $CHF_3$.

2. Procédé selon la revendication 1, caractérisé en ce que l'on utilise comme gaz surcritique du bioxyde de carbone et comme agent d'entraînement du propane sous des pressions de 40 à 100 bars, de préférence 50 à 80 bars, et à des températures dans la plage de 31 à 80 °C, de préférence 40 à 60 °C.

3. Procédé selon la revendication 1, caractérisé en ce que l'on utilise comme gaz surcritique du bioxyde de carbone gazeux et comme agent d'entraînement du butane sous des pressions de 40 à 100 bars, de préférence 50 à 80 bars, et à des températures dans la plage de 31 à 80 °C, de préférence 40 à 60 °C.

4. Procédé selon la revendication 1, caractérisé en ce que l'on utilise comme gaz surcritique un mélange d'azote et de $N_2O$ dans un rapport de 1 :2 à 2 :1 et comme agent d'entraînement du propane sous des pressions de 50 à 300 bars, de préférence 80 à 200 bars, et des températures dans la plage de 10 à 80 °C, de préférence 20 à 60 °C pour la séparation de la lécithine des sous-produits de la lécithine brute.

5. Procédé selon la revendication 1, caractérisé en ce que l'on utilise comme gaz surcritique un mélange d'azote et de $N_2O$ dans un rapport de 1 :2 à 2 :1 et comme agent d'entraînement du butane sous des pressions de 70 à 300 bars, de préférence de 80 à 200 bars, et à des températures dans la plage de 10 à 80 °C, de préférence 20 à 60 °C pour la séparation de la lécithine des sous-produits de la lécithine brute.

6. Procédé selon la revendication 1, caractérisé en ce que l'on utilise comme gaz surcritique du bioxyde de carbone et comme moyen d'entraînement du $CHF_2C$ sous des pressions de 60 à 200 bars, de préférence 90 à 150 bars, et des températures de 31 à 80 °C, de préférence 40 à 60 °C pour la séparation de la lécithine des sous-produits de la lécithine brute.

7. Procédé selon la revendication 1, caractérisé en ce que l'on utilise comme gaz surcritique du bioxyde d'azote et comme agent d'entraînement du $CHF_2C$ sous des pressions de 60 à 200 bars, de préférence 90 à 150 bars et à des températures de 36,5 à 80 °C, de préférence 40 à 60 °C, pour la séparation de la lécithine de sous-produits de sous-produits de la lécithine brute.

8. Procédé selon la revendication 1 ou 2, caractérisé en ce que l'on réalise la séparation des sous-produits extraits de la phase dissolvante sous pression par détente de 30 à 40 bars par remontée simultanée de la température de 70 à 100 °C.

9. Procédé selon l'une des revendications 1 à 8, caractérisé en ce que le temps de contact pour la séparation de la lécithine des sous-produits de la lécithine brute atteint de 2 à 10 minutes, de préférence de 3 à 5 minutes.

10. Procédé selon les revendications 1 à 9, caractérisé en ce que l'on ajoute à l'agent d'extraction dissolvant la lécithine un agent d'extraction, qui dissout très peu la lécithine, en une quantité de 2 à 40 % en poids, de préférence de 5 à 30 % en poids.

11. Procédé selon les revendications 1 à 10, caractérisé en ce que l'on sépare l'agent d'extraction sous pression dans un étage de régénération par modification de la pression et/ou de la température de l'extrait ou de l'agent d'extraction.

12. Procédé selon les revendications 1 à 11, caractérisé en ce que l'on recycle le milieu d'extraction dans une colonne à contre-courant après l'application de la modification de température ou de pression.

13. Procédé selon les revendications 1 à 12, caractérisé en ce que l'on prélève en continu ou en discontinu la lécithine pure de la solution fluide à partir du bas de la colonne à contre-courant.

Fig. 1

C_3H_8

Lecithin

Sojaöl

P = 90 bar
T = 50 °C

Lecithin
Sojaöl

$CO_2$

EP 0 156 374 B1

Fig. 2

Kreisgas

Regenerierkolonne

$E_1$

$R_0$

Rücklauf

$P_E$
Kopfprodukt zur
Entspannung

F
Zulauf

Trennkolonne

$R_n$

rischgas
G

Sumpfprodukt